(19) **Europäisches Patentamt**
**European Patent Office**
**Office européen des brevets**

(11) **EP 4 170 556 A1**

(12) **EUROPEAN PATENT APPLICATION**
published in accordance with Art. 153(4) EPC

(43) Date of publication:
**26.04.2023 Bulletin 2023/17**

(21) Application number: **21825372.2**

(22) Date of filing: **13.05.2021**

(51) International Patent Classification (IPC):
***G06N 5/04*** (2023.01)      ***G06N 20/00*** (2019.01)

(52) Cooperative Patent Classification (CPC):
**G06N 5/04; G06N 20/00**

(86) International application number:
**PCT/JP2021/018228**

(87) International publication number:
**WO 2021/256135 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.06.2020   JP 2020104786**

(71) Applicant: **Aising Ltd.**
**Tokyo 107-0052 (JP)**

(72) Inventors:
• **IDESAWA Junichi**
**Tokyo 107-0052 (JP)**
• **SUGAWARA Shimon**
**Tokyo 107-0052 (JP)**

(74) Representative: **Kilian Kilian & Partner**
**Aidenbachstraße 54**
**81379 München (DE)**

(54) **CONTROL DEVICE, METHOD, AND PROGRAM**

(57)      An object is to provide an additional learning technique for a decision tree that involves a small computational cost for additional learning, causes no change in inference time even if additional learning is performed, and needs no additional storage capacity or the like. A control device is provided that includes: an input data acquisition unit that acquires, as input data, data acquired from a target device; an inference processing unit that identifies an output node corresponding to the input data and generates associated output data to be used to control the target device, through inference processing using a learned decision tree; an actual data acquisition unit that acquires actual data acquired from the target device, the actual data corresponding to the input data; and an additional learning processing unit that performs additional learning processing for the learned decision tree by generating updated output data by updating the output data associated with the output node, based on the output data and the actual data.

Fig. 8

AT TIME OF
CONSTRUCTING
MODEL

AFTER ADDITIONAL
LEARNING

SPACE DIVISION
IS CHANGED

(A) CONCEPTUAL DIAGRAM OF
CONVENTIONAL EXAMPLE

AT TIME OF
CONSTRUCTING
MODEL

AFTER ADDITIONAL
LEARNING

OUTPUT VALUE
IN THIS AREA
IS CHANGED

SPACE DIVISION
IS UNCHANGED

(B) CONCEPTUAL DIAGRAM OF THE INVENTION
OF THE PRESENT APPLICATION

**Description**

Technical Field

The present invention relates to a control device and the like using a decision tree.

Background Art

In recent years, in cases where machine learning technology is applied to control of a predetermined device, a problem has been pointed out that control accuracy is gradually lowered due to a phenomenon called concept drift. Concept drift is a phenomenon in which a model gradually changes from the model initially developed as a learning target, due to degradation of a control-target device over time, or the like. As a technique for preventing control accuracy from being lowered due to concept drift, it has been considered in recent years to update a learned model by performing additional learning based on data acquired from a device.

On the other hand, decision trees such as CART have attracted attention as a machine learning technique in recent years. According to the decision trees, explainability and interpretability of a result of learning can be enhanced.

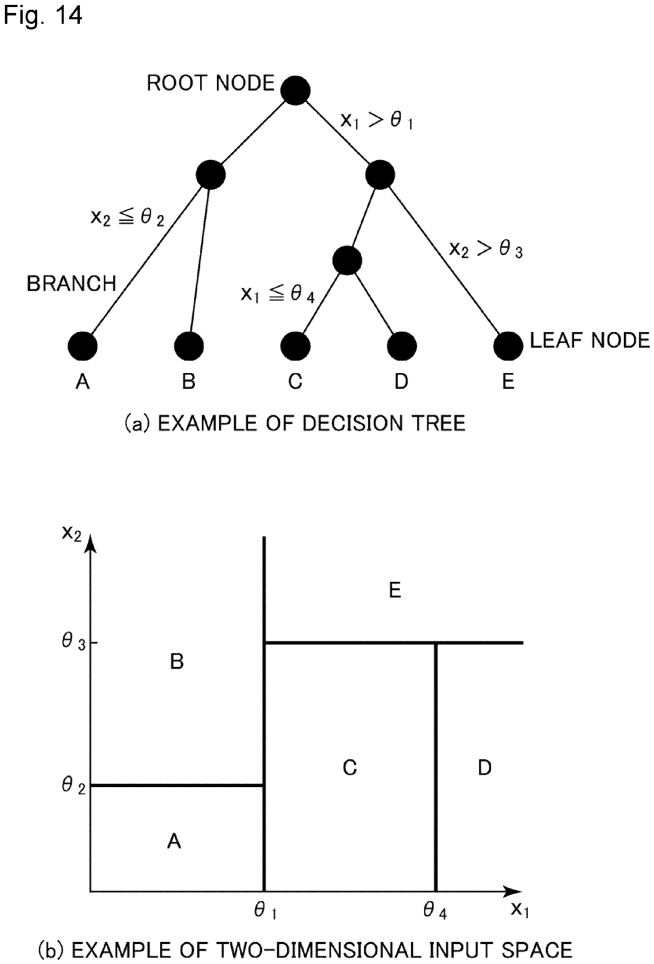

Figure 14 is an explanatory diagram related to a conventionally known decision tree. More specifically, Figure 14(a) is an explanatory diagram showing an example of a structure of a decision tree, and Figure 14(b) shows the decision tree in Figure 14(a), in a two-dimensional spatial form.

As apparent from the drawing, the decision tree forms a tree structure starting from a root node (an uppermost node in the diagram), which is a base end, to terminal-end leaf nodes (lowest nodes in the diagram) based on predetermined learned data. On each node, a branch condition is defined that is determined depending on a magnitude relationship among threshold values $\theta_1$ to $\theta_4$, as a result of machine learning. Thus, in an inference stage, input data inputted from the root node is eventually associated with any one leaf node of the leaf nodes A to E, and an output value is determined based on data associated with the associated leaf node (output node).

For example, in the example in the diagram, data that satisfies a condition $x_1 \leq \theta_1$ and a condition $x_2 \leq \theta_2$ is associated with the leaf node A. Data that satisfies the condition $x_1 \leq \theta_1$ and a condition $x_2 > \theta_2$ is associated with the leaf node B. An input that satisfies a condition $x_1 > \theta_1$, a condition $x_2 \leq \theta_3$, and a condition $x_1 \leq \theta_4$ is associated with the leaf node C. An input that satisfies the condition $x_1 > \theta_1$, the condition $x_2 \leq \theta_3$, and a condition $x_1 > \theta_4$ is associated with the leaf node D. An input that satisfies the condition $x_1 > \theta_1$ and a condition $x_2 > \theta_3$ is associated with the leaf node E.

As conventional techniques for performing additional learning for such a decision tree, mainly the following two techniques can be specified.

A first one is a technique in which the tree structure is further extended in a depth direction, based on additionally learned data. According to the technique, although the tree structure can be further branched, computational costs for both learning and inference increase because the size of the tree structure becomes larger. Moreover, in additional learning, addition of a new storage capacity is needed.

A second one is a technique in which branch conditions in the tree structure are reconfigured anew, based on additionally learned data (Patent Literature 1 as an example). According to the technique, optimal branch conditions can be reconfigured, with the additional data taken into consideration, and an inference cost after learning is unchanged from before. However, since the whole of machine learning is performed again, a computational cost for learning is high, and addition of a new storage capacity is needed in additional learning.

In other words, in additional learning for a decision tree, use of any of the techniques involves an increase in computational cost for learning or inference, and addition of a storage capacity.

Citation List

Patent Literature

Patent Literature 1: International Publication No. 2010/116450

Summary of Invention

Technical Problem

However, when machine learning technology is applied to control of a predetermined device, there is a certain limitation on available hardware resources in terms of cost or the like, in some cases. For example, many of control devices used in areas such as edge computing, which is receiving attention in recent years, are so-called embedded devices, in which case there are certain hardware limitations, such as limitations on computational throughput of a computing device and a storage capacity.

Accordingly, when an attempt is made to incorporate a decision tree that is open to additional learning as described above into a device with such limited hardware resources, a delay from a control cycle, an excess over a storage capacity, and the like may be caused due to an increase in computational cost for learning or inference, so that reliability and security of control may not be able to be guaranteed.

The present invention has been made in the above-described technical background, and an object thereof is to provide an additional learning technique for a decision tree that involves a small computational cost for additional learning, causes no change in inference time even if additional learning is performed, and needs no additional storage capacity or the like, and thus to provide a control device that can guarantee reliability and security of control.

Further other objects and effects of the present invention will be readily understood to those ordinarily skilled in the art, by referring to the following statement of the present description.

Solution to Problem

The above-described technical problem can be solved by a device, a method, a program, and the like that have configurations as follows.

Specifically, a control device according to the present invention includes: an input data acquisition unit that acquires, as input data, data acquired from a target device; an inference processing unit that identifies an output node corresponding to the input data and generates associated output data to be used to control the target device, through inference processing using a learned decision tree; an actual data acquisition unit that acquires actual data acquired from the target device, the actual data corresponding to the input data; and an additional learning processing unit that performs additional learning processing for the learned decision tree by generating updated output data by updating the output data associated with the output node, based on the output data and the actual data.

According to such a configuration, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

The additional learning processing unit may update the output data associated with the output node, based on the output data and the actual data, without involving a change in structure of the learned decision tree or a change in branch condition.

According to such a configuration, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

The updated output data may be an arithmetic average value of the output data before updating and the actual data.

According to such a configuration, since updating can be performed through simple arithmetic operation, a learning burden can be further lightened.

The updated output data may be a weighted average value of the output data before updating and the actual data, with reference to the number of data pieces associated with the output node.

According to such a configuration, since an effect of an update at an early stage of learning can be made relatively large and the effect can be made smaller as the number of times of learning increases, stable learning can be performed.

The updated output data may be a value obtained by adding, to the output data before updating, a result of multiplying a difference between the output data before updating and the actual data by a learning rate.

According to such a configuration, a rate of updating can be flexibly adjusted by adjusting the learning rate.

The learning rate may change according to the number of times the additional learning processing is performed.

According to such a configuration, since the learning rate can be lowered or the like as the number of times of learning increases, learning can be made stable.

The learned decision tree may be one of a plurality of decision trees for ensemble learning.

According to such a configuration, an additional learning technique for a decision tree that involves a small computational cost for additional learning, causes no change in inference time even if additional learning is performed, and needs no additional storage capacity or the like can be applied to each decision tree used in ensemble learning.

A control device according to the present invention in another aspect includes: a reference input data acquisition unit that acquires reference input data; a first output data generation unit that generates first output data by inputting the reference input data into a model generated based on training input data and training correct data corresponding to the training input data; a second output data generation unit that generates second output data by identifying an output node corresponding to the reference input data by inputting the reference input data into a learned decision tree generated by performing machine learning based on the training input data and differential training data between output data and the training correct data, the output data being generated by inputting the training input data into the model; a final output data generation unit that generates final output data, based on the first output data and the second output data; a reference correct data acquisition unit that acquires reference correct data; and an additional learning processing unit that performs additional learning processing for the learned decision tree by generating updated output data by updating the second output data associated with the output node, based on the second output data and differential data between the first output data and the reference correct data.

According to the configuration as described above, machine learning can be performed that is adaptive, due to online learning, to a change in characteristic of a target, such as concept drift, while maintaining a certain level of output accuracy due to an approximate function obtained beforehand. In other words, machine learning technology can be provided that is adaptive to a change in characteristic of a target, or the like, while guaranteeing output accuracy to a certain degree. At the time, neither a change in structure, such as depth, of the decision tree occurs, nor arithmetic operation that requires a relatively large amount of computation, such as calculation for branch conditions, is needed. Accordingly, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

The additional learning processing unit may update the second output data associated with the output node, based on the second output data and the differential data, without involving a change in structure of the learned decision tree or a change in branch condition.

According to such a configuration, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

The updated output data may be an arithmetic average value of the second output data before updating and the differential data.

According to such a configuration, since updating can be performed through simple arithmetic operation, a learning burden can be further lightened.

The updated output data may be a weighted average value of the second output data before updating and the differential data, with the number of data pieces hitherto associated with the output node taken into account.

According to such a configuration, since an effect of an update at an early stage of learning can be made relatively large and the effect can be made smaller as the number of times of learning increases, stable learning can be performed.

The updated output data may be a value obtained by adding, to the second output data before updating, a result of multiplying a difference between the second output data before updating and the differential data by a learning rate.

According to such a configuration, a rate of updating can be flexibly adjusted by adjusting the learning rate.

The learning rate may change according to the number of times the additional learning processing is performed.

According to such a configuration, since the learning rate can be lowered or the like as the number of times of learning increases, learning can be made stable.

The present invention can also be conceptualized as a method. Specifically, a method according to the present invention includes: an input data acquisition step of acquiring, as input data, data acquired from a target device; an inference processing step of identifying an output node corresponding to the input data and generating associated output data to be used to control the target device, through inference processing using a learned decision tree; an actual data acquisition step of acquiring actual data acquired from the target device, the actual data corresponding to the input data; and an additional learning processing step of performing additional learning processing for the learned decision tree by generating updated output data by updating the output data associated with the output node, based on the output data and the actual data.

A method according to the present invention in another aspect includes: a reference input data acquisition step of acquiring reference input data; a first output data generation step of generating first output data by inputting the reference input data into a model generated based on training input data and training correct data corresponding to the training input data; a second output data generation step of generating second output data by identifying an output node corresponding to the reference input data by inputting the reference input data into a learned decision tree generated by performing machine learning based on the training input data and differential training data between output data and the training correct data, the output data being generated by inputting the training input data into the model; a final output data generation step of generating final output data, based on the first output data and the second output data; a reference correct data acquisition step of acquiring reference correct data; and an additional learning processing step of performing additional learning processing for the learned decision tree by generating updated output data by updating the second output data associated with the output node, based on the second output data and differential data between the first output data and the reference correct data.

The present invention can also be conceptualized as a program. Specifically, a program according to the present invention executes: an input data acquisition step of acquiring, as input data, data acquired from a target device; an inference processing step of identifying an output node corresponding to the input data and generating associated output data to be used to control the target device, through inference processing using a learned decision tree; an actual data acquisition step of acquiring actual data acquired from the target device, the actual data corresponding to the input data; and an additional learning processing step of performing additional learning processing for the learned decision tree by generating updated output data by updating the output data associated with the output node, based on the output data and the actual data.

A program according to the present invention in another aspect includes: a reference input data acquisition step of acquiring reference input data; a first output data generation step of generating first output data by inputting the reference input data into a model generated based on training input data and training correct data corresponding to the training input data; a second output data generation step of generating second output data by identifying an output node corresponding to the reference input data by inputting the reference input data into a learned decision tree generated by performing machine learning based on the training input data and differential training data between output data and the training correct data, the output data being generated by inputting the training input data into the model; a final output data generation step of generating final output data, based on the first output data and the second output data; a reference correct data acquisition step of acquiring reference correct data; and an additional learning processing step of performing additional learning processing for the learned decision tree by generating updated output data by updating the second output data associated with the output node, based on the second output data and differential data between the first output data and the reference correct data.

The present invention can also be conceptualized as an information processing device. Specifically, an information processing device according to the present invention includes: an input data acquisition unit that acquires input data; an inference processing unit that identifies an output node corresponding to the input data and generates associated output data, through inference processing using a learned decision tree; a teaching data acquisition unit that acquires teaching data corresponding to the input data; and an additional learning processing unit that performs additional learning processing for the learned decision tree by generating updated output data by updating the output data associated with the output node, based on the output data and the teaching data.

The present invention can also be conceptualized as an information processing method. Specifically, an information processing method according to the present invention includes: an input data acquisition step of acquiring input data; an inference processing step of identifying an output node corresponding to the input data and generating associated output data, through inference processing using a learned decision tree; a teaching data acquisition step of acquiring teaching data corresponding to the input data; and an additional learning processing step of performing additional learning processing for the learned decision tree by generating updated output data by updating the output data associated with the output node, based on the output data and the teaching data.

Moreover, the present invention can also be conceptualized as an information processing program. Specifically, an information processing program according to the present invention includes: an input data acquisition step of acquiring input data; an inference processing step of identifying an output node corresponding to the input data and generating associated output data, through inference processing using a learned decision tree; a teaching data acquisition step of acquiring teaching data corresponding to the input data; and an additional learning processing step of performing additional learning processing for the learned decision tree by generating updated output data by updating the output data associated with the output node, based on the output data and the teaching data.

Advantageous Effect of Invention

According to the present invention, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

Brief Description of Drawings

[Figure 1] Figure 1 is a functional block diagram of an information processing device.
[Figure 2] Figure 2 is a functional block diagram of a control device.
[Figure 3] Figure 3 is a general flowchart according to a first embodiment.
[Figure 4] Figure 4 is a conceptual diagram of a decision tree to be generated.
[Figure 5] Figure 5 is a detailed flowchart of processing performed by the control device.
[Figure 6] Figure 6 is a detailed flowchart of control processing based on inference processing.
[Figure 7] Figure 7 is a detailed flowchart of additional learning processing.
[Figure 8] Figure 8 is a conceptual diagram for supplementing understanding of additional learning.
[Figure 9] Figure 9 is a conceptual diagram related to initial learning processing.
[Figure 10] Figure 10 is a conceptual diagram of inference processing.
[Figure 11] Figure 11 is a conceptual diagram related to online learning.
[Figure 12] Figure 12 is an explanatory diagram showing an outline of a technique for solving a classification problem by using a regression tree.
[Figure 13] Figure 13 is an explanatory diagram showing a result of additional learning.
[Figure 14] Figure 14 is an explanatory diagram related to a conventional decision tree.

Description of Embodiments

Hereinafter, an embodiment of the present invention will be described in detail with reference to the accompanying drawings.

(1. First embodiment)

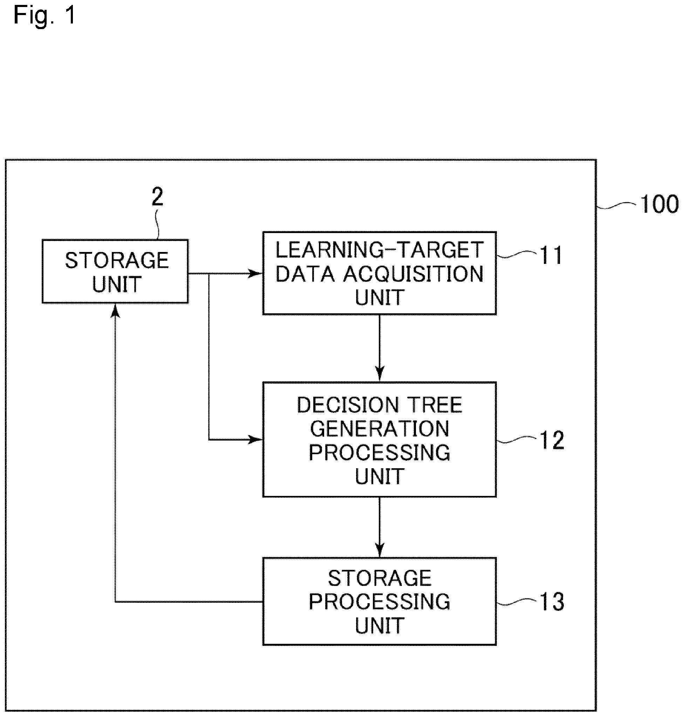

A first embodiment of the present invention will be described with reference to Figures 1 to 8.

(1.1 Configuration)

Figure 1 is a functional block diagram of an information processing device 100 that performs initial learning. As apparent from the drawing, the information processing device 100 incudes a storage unit 2, a learning-target data acquisition unit 11, a decision tree generation processing unit 12, and a storage processing unit 13.

Note that Figure 1 is the functional block diagram of the information processing device 100, and the information processing device 100 includes, as hardware, a control unit such as a CPU or a GPU, a storage unit including a ROM, a RAM, a hard disk, and/or a flash memory and the like, a communication part including a communication unit and the like, an input unit, a display control unit, an I/O unit, and the like. Each of the functions mentioned above are implemented mainly by the control unit.

The storage unit 2 stores data that is a target to be learned through machine learning. The learning-target data is so-called training data, and is data acquired beforehand from a control-target device.

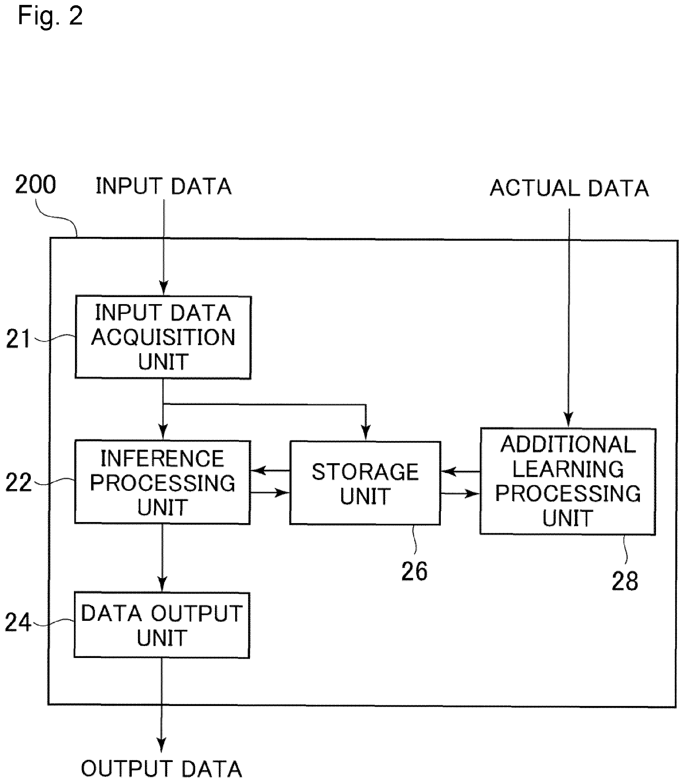

Figure 2 is a functional block diagram of a control device 200 that performs inference processing and additional learning, and that is an embedded system to be embedded in the control-target device. As apparent from the drawing, the control device 200 includes an input data acquisition unit 21, an inference processing unit 22, a data output unit 24, a storage unit 26, and an additional learning processing unit 28.

Note that Figure 2 is the functional block diagram of the control device 200, and the control device 200 includes, as hardware, a control unit such as a CPU, a storage unit including memory such as a ROM, a RAM, and/or a flash memory, an I/O unit, and the like. Each of the functions mentioned above are implemented mainly by the control unit.

Note that the hardware configurations are not limited to the configurations described above. Accordingly, for example, each of the devices may be configured as a system including a plurality of devices, or the like.

(1.2 Operation)

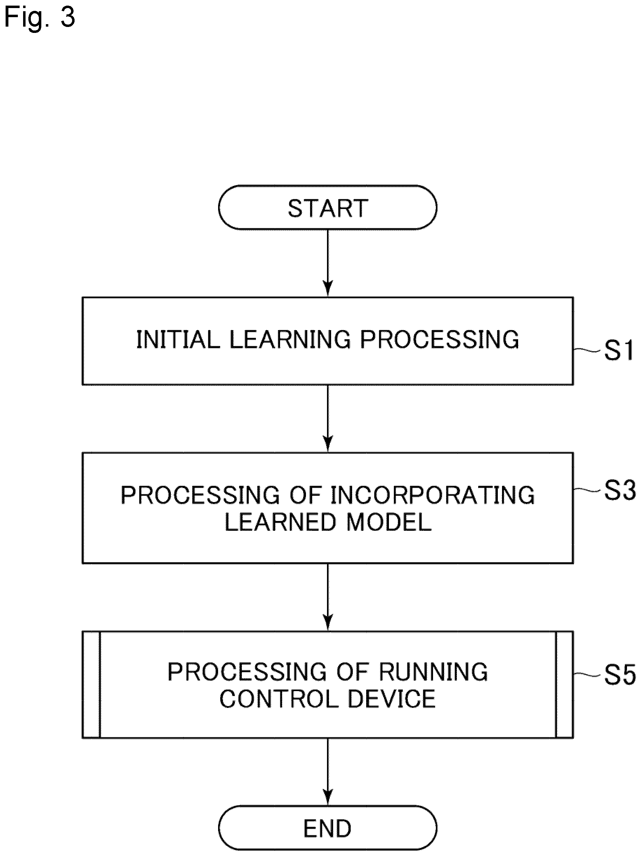

Next, operation of the invention according to the present embodiment will be described with reference to Figures 3 to 8.

Figure 3 is a general flowchart according to the first embodiment, related to a procedure from initial learning up to running the control device 200.

As apparent from the drawing, first, initial learning processing is performed (S1). The initial learning processing is processing in which machine learning is performed on the information processing device 100 by using training data acquired beforehand from the control-target device, and a learned decision tree is generated.

More specifically, the learning-target data acquisition unit 11 acquires, from the storage unit 2, learning-target data required to generate a decision tree. The decision tree generation processing unit 12 generates a decision tree through machine learning processing, based on the data acquired by the learning-target data acquisition unit 11 and predetermined preconfigured information (parameters such as a tree structure depth and the like), which is read beforehand from the storage unit 2. Information related to the generated decision tree is stored again in the storage unit 2 by the storage processing unit 13. Note that the decision tree generated in the present embodiment is a regression tree that is capable of outputting a continuous value.

In other words, the decision tree adapted to a model of the control-target device in an initial state is generated by the information processing device 100.

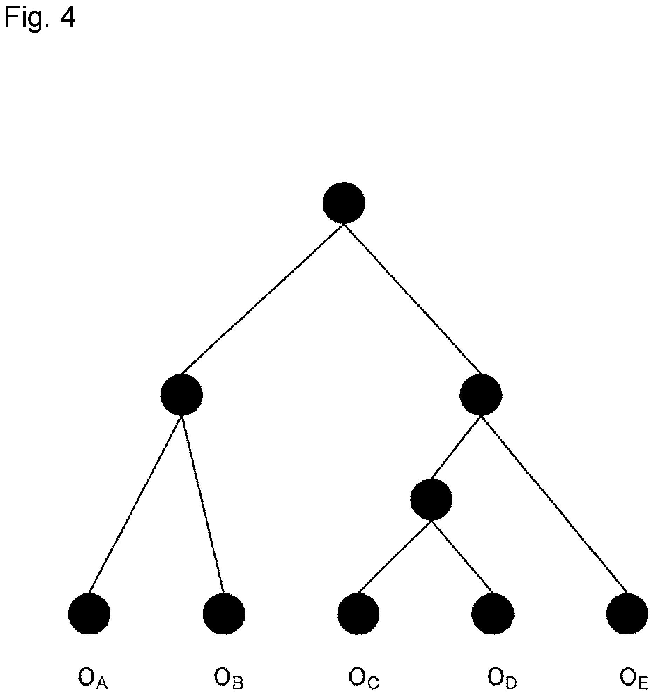

Figure 4 is a conceptual diagram of the decision tree generated through machine learning. As apparent from the drawing, the decision tree is configured by hierarchically arranging nodes, each of which has a branch condition. Moreover, output values, for example, $O_A$ to $O_E$ in the example in the drawing, which are based on associated data, are associated with individual terminal-end (leaf) nodes, respectively. Note that the decision tree shown in Figure 4 is an example, and a structure, such as a depth, of the decision tree can be flexibly changed.

Referring back to Figure 3, when the initial learning processing (S1) is completed, processing of incorporating the learned model (learned decision tree) generated by performing initial learning into the control device 200 is next performed (S3). In the present embodiment, the learned decision tree is transferred by directly connecting the information processing device 100 to the control device 200. Note that the incorporation processing is not limited to the configuration in the present embodiment, but may be, for example, processing in which the learned decision tree is transmitted from the information processing device 100 via a network such as the Internet and stored in the control-target device.

After the processing of incorporating the learned decision tree into the control device 200 is completed, processing of incorporating the control device 200 into the control-target device and running the control-target device is performed (S5).

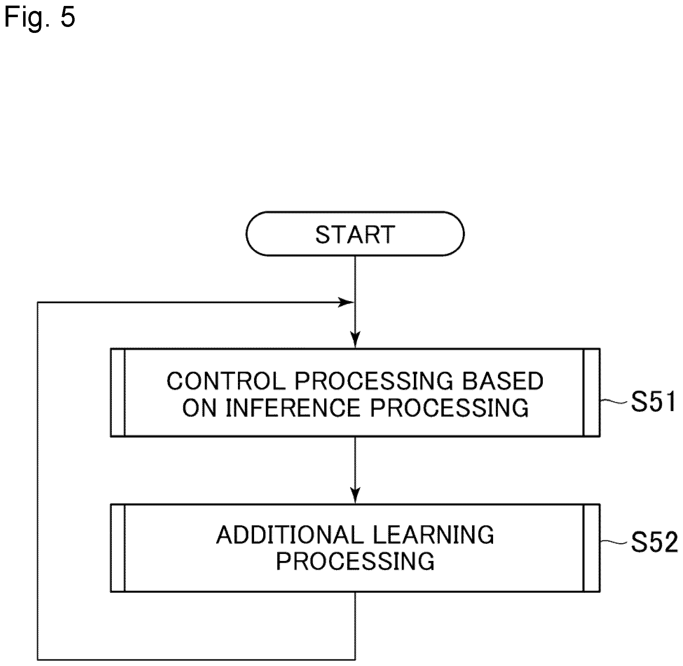

Figure 5 is a detailed flowchart of processing that is performed by the control device 200 while the control-target device is running. As apparent from the drawing, when the processing is started, control processing over the control-target device based on inference processing is performed (S51).

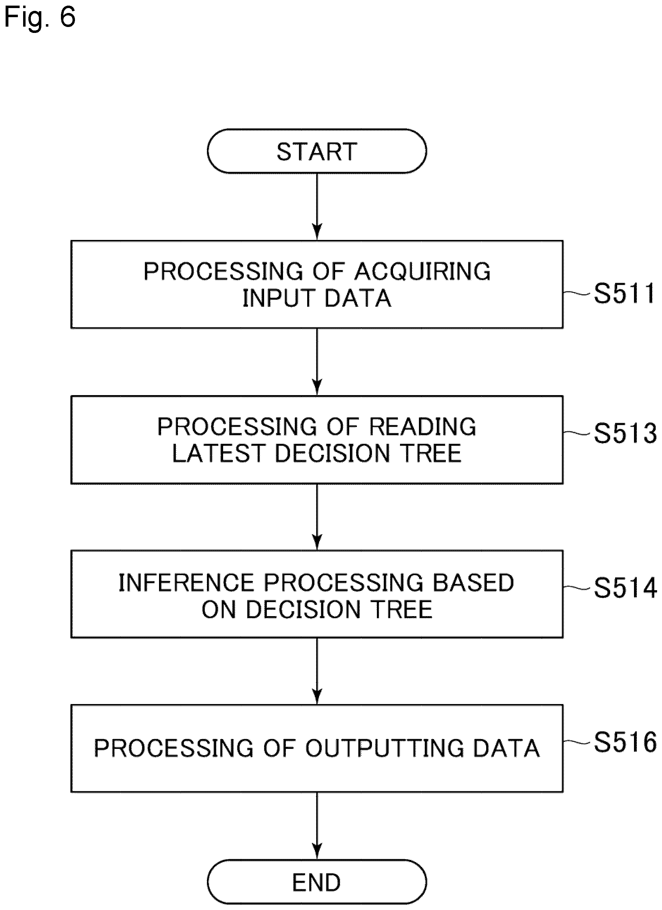

Figure 6 is a detailed flowchart of the control processing based on the inference processing (S51). As apparent from the drawing, when the processing is started, the input data acquisition unit 21 performs processing of acquiring input data from the control-target device (S511). Next, the inference processing unit 22 performs processing of reading the latest learned decision tree from the storage unit 26 (S513).

Thereafter, the inference processing unit 22 performs the inference processing by inputting the input data into the read decision tree, and generates output data (S514). In other words, an output node is identified by classifying the data according to a branch condition associated with each node, and generates output data, based on data associated with the output node.

Thereafter, the generated output data is outputted from the control device 200 by the data output unit 24 (S516). The output data is provided to the control-target device and is used for device control. Then, the processing is completed.

Referring back to Figure 5, when the control processing based on the inference processing is completed, additional learning processing is next performed (S52).

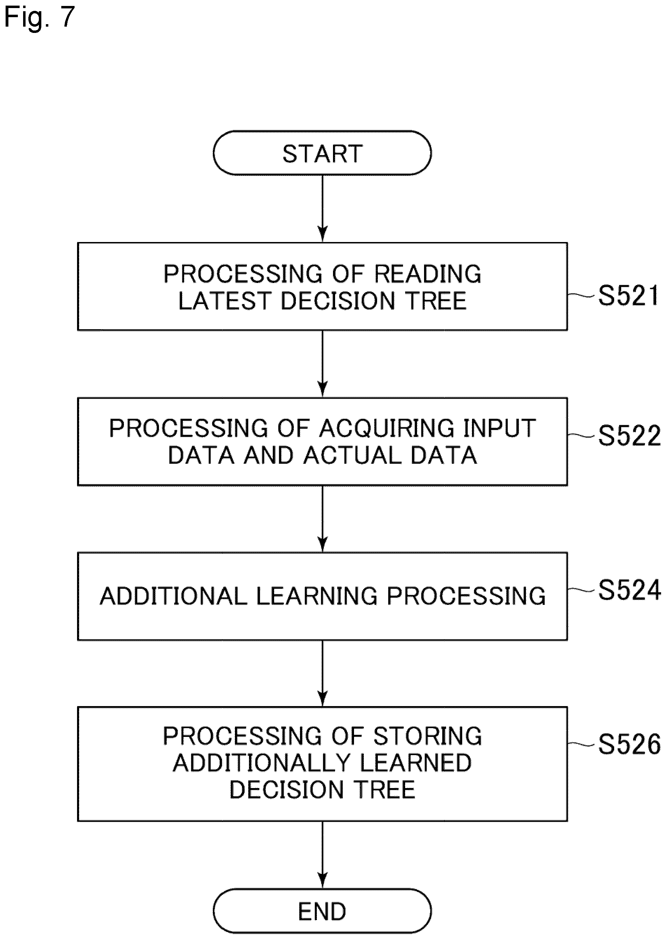

Figure 7 is a detailed flowchart of the additional learning processing (S52). As apparent from the drawing, when the processing is started, the additional learning processing unit 28 performs processing of reading the latest decision tree from the storage unit 26 (S521).

Moreover, the additional learning processing unit 28 performs processing of acquiring input data from the storage unit 26 and acquiring actual data, which is data in actuality corresponding to the input data, from the control-target device (S522). Thereafter, additional learning is performed for the decision tree by using the input data and the actual data (S524).

More specifically, first, a terminal-end output node corresponding to the input data is identified, and output data $O_{1cur}$ associated with the terminal-end node is identified. Thereafter, processing of updating the output data $O_{1cur}$ at the output node by using the actual data $O_1$ and obtaining updated output data $O_{1new}$ is performed. The updating processing is performed by calculating an arithmetic average of the output data $O_{1cur}$ before updating and the actual data $O_1$. In other words, the updated output data $O_{1new}$ is calculated by using a following expression.

[Expression 1]

$$O_{1new} = \frac{O_{1cur} + O_1}{2}$$

After the additional learning processing is completed, the additional learning processing unit 28 performs processing of storing the decision tree into the storage unit 26 (S526), and the processing is completed.

Referring back to Figure 5, the control processing based on the inference processing is performed again (S51), and the processing is iterated thereafter.

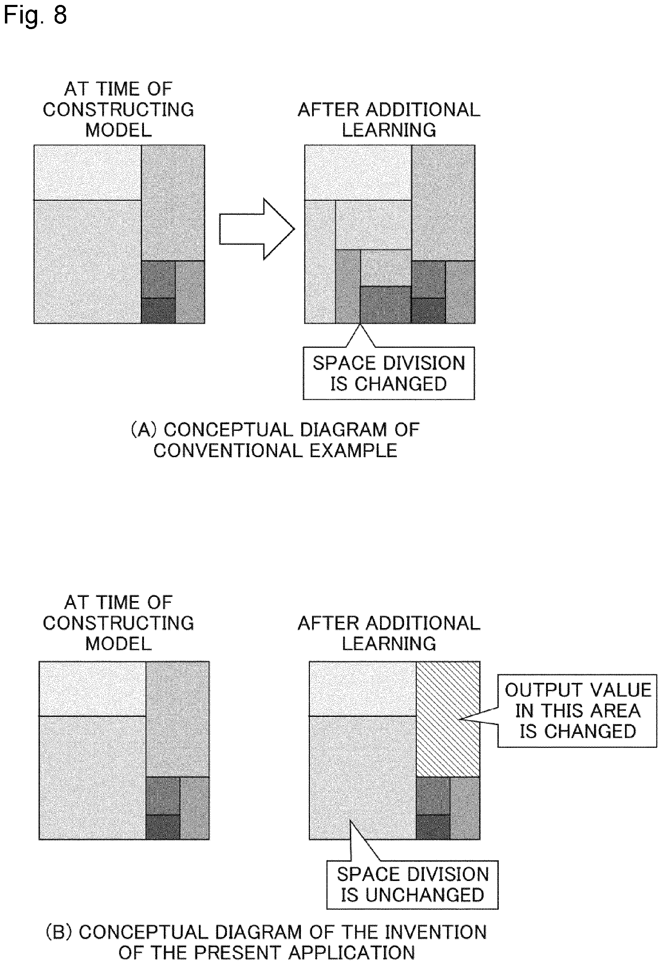

Figure 8 is a conceptual diagram for supplementing understanding of the above-described additional learning. Figure 8(A) shows a conceptual diagram related to division of a space in a two-dimensional state when the technique for extending a tree structure is adopted as a conventional technique for addition, and Figure 8(B) is a conceptual diagram related to division of a space in a two-dimensional state when the technique for additional learning according to the invention of the present application is adopted.

As apparent from Figure 8(A), in the conventional technique for additional learning, when additional learning is performed by extending a tree structure when a division state at a time of constructing a model is the state on the left side of the drawing, learning is performed in such a manner that each divided area is further sub-divided.

On the other hand, in the example of the additional learning according to the present embodiment, as apparent from Figure 8(B), it can be seen that when additional learning is performed when a division state at a time of constructing a model is the state on the left side of the drawing, only an output value in each area can be changed, without changing the division state.

According to the configuration as described above, in additional learning, neither a change in structure, such as depth, of the decision tree occurs, nor arithmetic operation that requires a relatively large amount of computation, such as calculation for branch conditions, is needed. Accordingly, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

Note that although updating of output data is performed by using Expression 1 in the present embodiment, the present invention is not limited to such a configuration. In other words, any other method may be used in which an output value is updated without involving a change in decision tree structure, for example, extension or the like of the tree structure, or a change in branch condition or the like.

(2. Second embodiment)

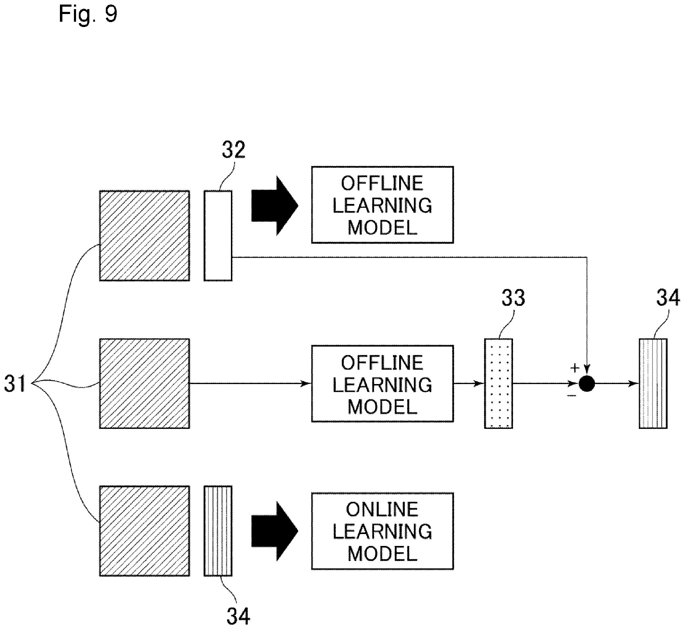

Subsequently, a second embodiment of the present invention, which uses a plurality of learned models, will be described with reference to Figures 9 to 11. In the present embodiment, a scenario is assumed in which additional learning is performed on a learning model for which both offline learning and online learning are used. Note that a description of configurations that are approximately the same as in the first embodiment will be omitted as appropriate.

In the present embodiment, online learning means that a parameter or the like of a learning model incorporated in a control device is updated on the control device by performing machine learning based on data acquired by a control-target device. At the time, an updating cycle can be variously changed, and the learning may be, for example, sequential learning that is performed in line with a device control cycle, or may be batch learning, mini-batch learning, or the like that are performed when a predetermined amount of learning-target data is accumulated.

In the second embodiment, as in the first embodiment, initial learning processing (S1), processing of incorporating a learned model (S3), and processing of running a control-target device (S5) are also performed (Figure 3).

Figure 9 is a conceptual diagram related to the initial learning processing (S1). As apparent from the drawing, learning processing for an offline learning model is conceptually shown on the top, processing of generating differential data is conceptually shown in the middle, and learning processing for an online learning model is conceptually shown at the bottom.

When the initial learning processing is started, first, learning processing related to the offline learning model is performed. As apparent from the top of Figure 9, a data group of training data including training input data 31 and training correct data 32 is inputted into the offline learning model, and learning processing is performed. Thus, a learned model through offline learning is generated based on the training data group.

Note that although any one or a combination of various known learning models can be adopted for the offline learning model in the present embodiment, a decision tree capable of producing a regression output (regression tree) is adopted in the present embodiment. Note that a formulated model without involving learning may be adopted in place of the offline learning model. In the following, a learned model obtained through machine learning and a model based on formulation will be collectively referred simply as a model, in some cases.

Next, after the learned model is generated, the processing of generating differential data is performed. As apparent from the middle of Figure 9, the processing of generating differential data 34 by inputting the training input data 31 into the generated learned model, calculating output data thereof (result of inference), and calculating a difference between the output data and the training correct data 32 is performed.

After the differential data 34 is generated, learning processing for the online learning model is performed. As apparent from the bottom of Figure 9, processing of generating a learned online learning model is performed by performing machine learning for the online learning model by using the training input data 31 and the differential data 34. Note that the learned model is a decision tree capable of producing a regression output (regression tree).

When the initial learning processing (S1) is completed, the processing of incorporating the generated learned offline learning model and the generated learned online learning model into the control device 200 is next performed (S3).

Subsequently, the processing of running the control-target device (S5), that is, iteration of control processing over the control-target device based on inference processing (S51) and additional learning processing (S52) is performed (see Figure 5).

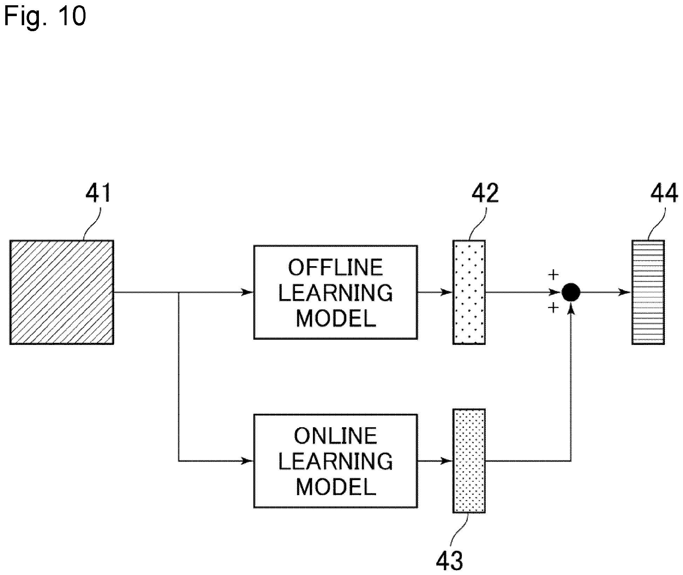

Figure 10 is a conceptual diagram of the inference processing according to the present embodiment. As apparent from the drawing, when input data 41 is acquired from the control-target device, the input data 41 is inputted into the learned offline learning model and the learned online learning model. The offline learning model and the online learning model individually perform inference processing, and generate output data 42 of the offline learning model and output data 43 of the online learning model, respectively.

The output data are added thereafter, and ultimate output data 44 is generated. The generated output data is outputted from the control device by the data output unit. The output data is provided to the control-target device and used for device control.

When the control processing over the control-target device based on the inference processing is completed, the additional learning processing is next performed. In the present embodiment, the additional learning processing is performed only with respect to the online learning model.

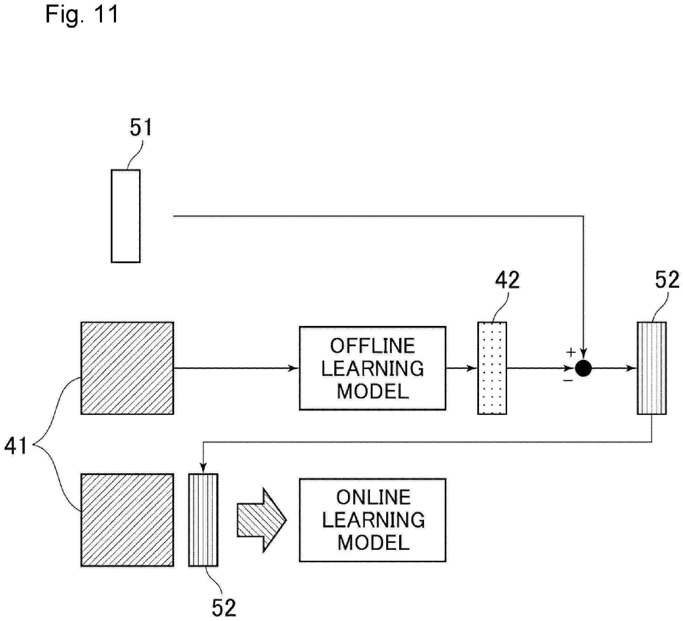

Figure 11 is a conceptual diagram related to online learning. As apparent from the drawing, the input data 41 acquired from the control-target device is inputted into the learned offline learning model, and the output data 42, which is a result of inference, is generated from the learned model. Differential data 52 is generated from a difference between the output data 42 and actual data 51 acquired from the control-target device correspondingly to the input data 41. The additional learning processing is performed by updating the learned online learning model, that is, the learned decision tree, based on the differential data 52 and the input data 41.

More specifically, first, in the online learning model, a terminal-ended output node corresponding to the input data 41 is identified, and output data $O_{cur}$ associated with the terminal-ended node is identified. Thereafter, processing of obtaining updated output data $O_{new}$ is performed by updating the output data $O_{cur}$ at the output node by using the actual data O (51) and the output data $O_{Off\_cur}$ (42) of the offline learning model. The updating processing is performed by calculating an arithmetic average of the output data $O_{cur}$ before updating and the differential data 52 between the actual data O and the output data $O_{Off\_cur}$ (42) of the offline learning model. In other words, the updated output data $O_{new}$ is calculated by using a following expression.

[Expression 2]

$$O_{new} = \frac{O_{cur} + (O - O_{off\_cur})}{2}$$

After the additional learning processing is completed, processing of storing the decision tree into the storage unit is performed. Thereafter, the processing of running the control-target device is performed by iterating the control processing over the control-target device based on the inference processing, and the additional learning processing.

According to the configuration as described above, machine learning can be performed that is adaptive, due to online learning, to a change in characteristic of a target, such as concept drift, while maintaining a certain level of output accuracy due to an approximate function obtained beforehand through offline learning. In other words, machine learning technology can be provided that is adaptive to a change in characteristic of a target, a change in model, or the like, while guaranteeing output accuracy to a certain degree.

At the time, neither a change in structure, such as depth, of the decision tree occurs, nor arithmetic operation that requires a relatively large amount of computation, such as calculation for branch conditions, is needed. Accordingly, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

(3. Variation)

The present invention is not limited to the above-described embodiments, and can be implemented by making various modifications.

In the embodiments, a description is given particularly of an example in which a regression problem is solved by using a regression tree, among decision trees. However, the present invention is not limited to such a configuration. Accordingly, a classification problem can also be solved by using the above-described configurations.

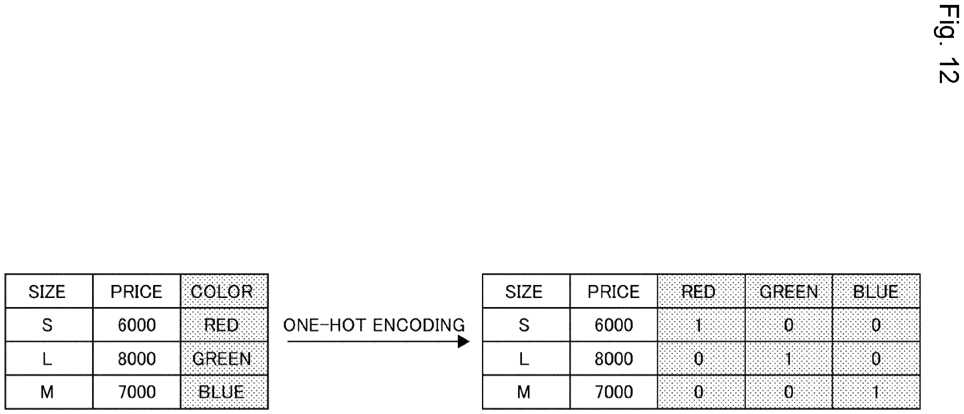

Figure 12 is an explanatory diagram showing an outline of a technique for solving a classification problem by using a regression tree. On the left side of the drawing, a table is presented in which three pieces of merchandise are listed, with attention focused on size, price, and color. In such a state, a situation is considered in which a color of a new piece of merchandise is inferred based on a size and a price of the new piece of merchandise.

Here, colors include "red", "green", and "blue", which are labels and therefore cannot be handled as they are in a regression tree. Accordingly, so-called one-hot encoding is utilized. One-hot encoding is processing of substituting a variable with a new feature having a dummy variable of 0 or 1.

On the right side of the drawing, a table is shown that presents states of the individual variables after one-hot encoding processing. As apparent from the drawing, a title "Color" is substituted with three titles "Red", "Green", and "Blue", and "1" is placed for a corresponding color, and "0" is placed for a non-corresponding color. According to such a configuration, a problem can be treated as a regression problem by converting output dimension from one dimension to three dimensions.

A description will be given of a case in which additional learning is further performed. In the example, it is assumed that as further new input data, data on a piece of merchandise with a size of "S", a price of "6000", and a color of "green" is additionally learned.

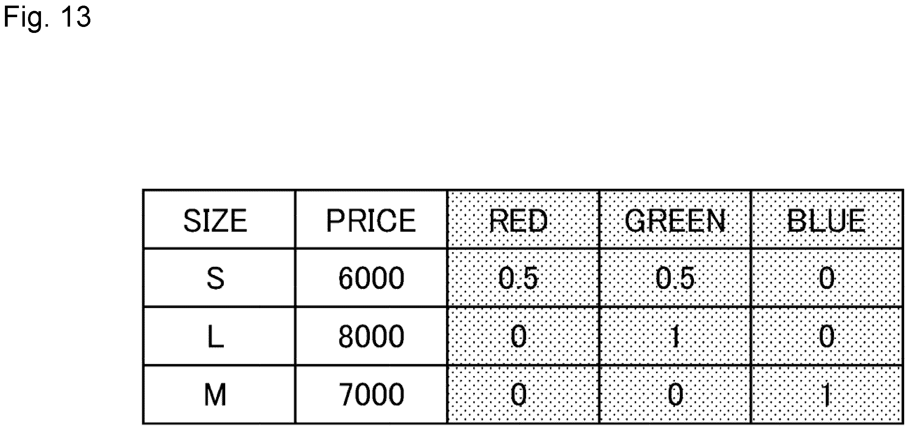

Figure 13 is an explanatory diagram showing a result of the additional learning. In the example in the drawing, output values are treated as probability values and configured such that a total of the output values becomes 1, and "red" and "green" are updated, each to 0.5. In other words, according to the above-described configuration, a classification problem can be solved by using a regression tree.

In the above-described configuration, when additional learning is performed, output data after updated is calculated by using an arithmetic average. However, the present invention is not limited to such a configuration.

Accordingly, for example, when current output data at an output node is $O_{1cur}$, actual data is $O_1$, and the number of data pieces learned so far is num, updated output data $O_{1new}$ may be as follows by using a weighted average.

[Expression 3]

$$O_{1new} = \frac{num * O_{1cur} + O_1}{num + 1}$$

Moreover, for example, updating may be performed by adding, to the current output data $O_{1cur}$ at the output node, a result of multiplying a difference between the current output data $O_{1cur}$ and the actual data $O_1$ by a predetermined learning rate.

[Expression 4]

$$O_{1new} = O_{1cur} + \eta \left( O_1 - O_{1cur} \right)$$

Needless to say, the above expressions can be similarly applied also to the configuration in the second embodiment. For example, the online learning model can be updated by substituting the actual data $O_1$ in Expression 4

with a difference between the actual data O and the output $O_{off\_cur}$ of the offline learning model, as follows.

[Expression 5]

$$O_{new} = O_{cur} + \eta \left( O - O_{off\_cur} - O_{cur} \right)$$

In additional learning, when any of the updating techniques is adopted, neither a change in structure, such as depth, of the decision tree occurs, nor arithmetic operation that requires a relatively large amount of computation, such as calculation for branch conditions, is needed. Accordingly, an additional learning technique for a decision tree can be provided that involves a small computational cost for additional learning, causes no change in inference time even if additional learning is performed, and needs no additional storage capacity or the like. Thus, for example, in a case of performing online additional learning for a decision tree under limited hardware resources, or the like, it is possible to provide a control device that can guarantee reliability and security of control.

In the above-described configuration, a single decision tree is used. However, the present invention is not limited to such a configuration. Accordingly, for example, the present invention may be applied to ensemble learning that uses a plurality of decision trees, such as random forest. In other words, when additional learning processing is performed for each decision tree, output data may be directly updated, without changing a division state.

According to such a configuration, an additional learning technique for a decision tree that involves a small computational cost for additional learning, causes no change in inference time even if additional learning is performed, and needs no additional storage capacity or the like can be applied to each decision tree used in ensemble learning.

Although embodiments of the present invention have been described hereinabove, the embodiments only show some of application examples of the present invention, and are not intended to limit the technical scope of the present invention to the specific configurations in the embodiments. Moreover, the embodiments can be combined as appropriate to the extent that no contradiction arises.

Industrial Applicability

The present invention is applicable to various industries and the like that utilize machine learning technology.

Reference Signs List

| | |
|---|---|
| 2 | Storage unit |
| 11 | Learning-target data acquisition unit |
| 12 | Decision tree generation processing unit |
| 13 | Storage processing unit |
| 21 | Input data acquisition unit |
| 22 | Inference processing unit |
| 24 | Data output unit |
| 26 | Storage unit |
| 28 | Additional learning processing unit |
| 100 | Information processing device |
| 200 | Control device |

**Claims**

1. A control device comprising:

an input data acquisition unit that acquires, as input data, data acquired from a target device;
an inference processing unit that identifies an output node corresponding to the input data and generates associated output data to be used to control the target device, through inference processing using a learned decision tree;
an actual data acquisition unit that acquires actual data acquired from the target device, the actual data corresponding to the input data; and

an additional learning processing unit that performs additional learning processing for the learned decision tree by generating updated output data by updating the output data associated with the output node, based on the output data and the actual data.

2. The control device according to claim 1, wherein the additional learning processing unit updates the output data associated with the output node, based on the output data and the actual data, without involving a change in structure of the learned decision tree or a change in branch condition.

3. The control device according to claim 1, wherein the updated output data is an arithmetic average value of the output data before updating and the actual data.

4. The control device according to claim 1, wherein the updated output data is a weighted average value of the output data before updating and the actual data, with reference to the number of data pieces associated with the output node.

5. The control device according to claim 1, wherein the updated output data is a value obtained by adding, to the output data before updating, a result of multiplying a difference between the output data before updating and the actual data by a learning rate.

6. The control device according to claim 5, wherein the learning rate changes according to the number of times the additional learning processing is performed.

7. The control device according to any one of claims 1 to 6, wherein the learned decision tree is one of a plurality of decision trees for ensemble learning.

8. A control device comprising:

a reference input data acquisition unit that acquires reference input data;
a first output data generation unit that generates first output data by inputting the reference input data into a model generated based on training input data and training correct data corresponding to the training input data;
a second output data generation unit that generates second output data by identifying an output node corresponding to the reference input data by inputting the reference input data into a learned decision tree generated by performing machine learning based on the training input data and differential training data between output data and the training correct data, the output data being generated by inputting the training input data into the model;
a final output data generation unit that generates final output data, based on the first output data and the second output data;
a reference correct data acquisition unit that acquires reference correct data; and
an additional learning processing unit that performs additional learning processing for the learned decision tree by generating updated output data by updating the second output data associated with the output node, based on the second output data and differential data between the first output data and the reference correct data.

9. The control device according to claim 8, wherein the additional learning processing unit updates the second output data associated with the output node, based on the second output data and the differential data, without involving a change in structure of the learned decision tree or a change in branch condition.

10. The control device according to claim 8, wherein the updated output data is an arithmetic average value of the second output data before updating and the differential data.

11. The control device according to claim 8, wherein the updated output data is a weighted average value of the second output data before updating and the differential data, with reference to the number of data pieces associated with the output node.

12. The control device according to claim 8, wherein the updated output data is a value obtained by adding, to the second output data before updating, a result of multiplying a difference between the second output data before updating and the differential data by a learning rate.

13. The control device according to claim 12, wherein the learning rate changes according to the number of times the additional learning processing is performed.

14. A control method for a device, comprising:

an input data acquisition step of acquiring, as input data, data acquired from a target device;

an inference processing step of identifying an output node corresponding to the input data and generating associated output data to be used to control the target device, through inference processing using a learned decision tree;

an actual data acquisition step of acquiring actual data acquired from the target device, the actual data corresponding to the input data; and

an additional learning processing step of performing additional learning processing for the learned decision tree by generating updated output data by updating the output data associated with the output node, based on the output data and the actual data.

15. A control method for a device, comprising:

a reference input data acquisition step of acquiring reference input data;

a first output data generation step of generating first output data by inputting the reference input data into a model generated based on training input data and training correct data corresponding to the training input data;

a second output data generation step of generating second output data by identifying an output node corresponding to the reference input data by inputting the reference input data into a learned decision tree generated by performing machine learning based on the training input data and differential training data between output data and the training correct data, the output data being generated by inputting the training input data into the model;

a final output data generation step of generating final output data, based on the first output data and the second output data;

a reference correct data acquisition step of acquiring reference correct data; and

an additional learning processing step of performing additional learning processing for the learned decision tree by generating updated output data by updating the second output data associated with the output node, based on the second output data and differential data between the first output data and the reference correct data.

16. A control program for a device, executing:

an input data acquisition step of acquiring, as input data, data acquired from a target device;

an inference processing step of identifying an output node corresponding to the input data and generating associated output data to be used to control the target device, through inference processing using a learned decision tree;

an actual data acquisition step of acquiring actual data acquired from the target device, the actual data corresponding to the input data; and

an additional learning processing step of performing additional learning processing for the learned decision tree by generating updated output data by updating the output data associated with the output node, based on the output data and the actual data.

17. A control program for a device, comprising:

a reference input data acquisition step of acquiring reference input data;

a first output data generation step of generating first output data by inputting the reference input data into a model generated based on training input data and training correct data corresponding to the training input data;

a second output data generation step of generating second output data by identifying an output node corresponding to the reference input data by inputting the reference input data into a learned decision tree generated by performing machine learning based on the training input data and differential training data between output data and the training correct data, the output data being generated by inputting the training input data into the model;

a final output data generation step of generating final output data, based on the first output data and the second output data;

a reference correct data acquisition step of acquiring reference correct data; and

an additional learning processing step of performing additional learning processing for the learned decision tree by generating updated output data by updating the second output data associated with the output node, based on the second output data and differential data between the first output data and the reference correct data.

**18.** An information processing device comprising:

an input data acquisition unit that acquires input data;
an inference processing unit that identifies an output node corresponding to the input data and generates associated output data, through inference processing using a learned decision tree;
a teaching data acquisition unit that acquires teaching data corresponding to the input data; and
an additional learning processing unit that performs additional learning processing for the learned decision tree by generating updated output data by updating the output data associated with the output node, based on the output data and the teaching data.

**19.** An information processing method comprising:

an input data acquisition step of acquiring input data;
an inference processing step of identifying an output node corresponding to the input data and generating associated output data, through inference processing using a learned decision tree;
a teaching data acquisition step of acquiring teaching data corresponding to the input data; and
an additional learning processing step of performing additional learning processing for the learned decision tree by generating updated output data by updating the output data associated with the output node, based on the output data and the teaching data.

**20.** An information processing program comprising:

an input data acquisition step of acquiring input data;
an inference processing step of identifying an output node corresponding to the input data and generating associated output data, through inference processing using a learned decision tree;
a teaching data acquisition step of acquiring teaching data corresponding to the input data; and
an additional learning processing step of performing additional learning processing for the learned decision tree by generating updated output data by updating the output data associated with the output node, based on the output data and the teaching data.

Fig. 1

Fig. 2

200  INPUT DATA                                    ACTUAL DATA

21 — INPUT DATA ACQUISITION UNIT

22 — INFERENCE PROCESSING UNIT  →  STORAGE UNIT  ←  ADDITIONAL LEARNING PROCESSING UNIT

26

28

24 — DATA OUTPUT UNIT

OUTPUT DATA

Fig. 3

```
                    ┌──────────────┐
                    │    START     │
                    └──────┬───────┘
                           │
                           ▼
        ┌──────────────────────────────────────┐
        │   INITIAL LEARNING PROCESSING         │──S1
        └──────────────────┬───────────────────┘
                           │
                           ▼
        ┌──────────────────────────────────────┐
        │   PROCESSING OF INCORPORATING         │──S3
        │   LEARNED MODEL                       │
        └──────────────────┬───────────────────┘
                           │
                           ▼
        ┌──┬───────────────────────────────┬───┐
        │  │  PROCESSING OF RUNNING         │   │──S5
        │  │  CONTROL DEVICE                │   │
        └──┴───────────────┬───────────────┴───┘
                           │
                           ▼
                    ┌──────────────┐
                    │     END      │
                    └──────────────┘
```

Fig. 4

$O_A$   $O_B$   $O_C$   $O_D$   $O_E$

Fig. 5

```
        ┌─────────────┐
        │    START    │
        └──────┬──────┘
               │
     ┌─────────┼──────────────────────────────┐
     │         ▼                               │
     │  ┌──────────────────────────────┐       │
     │  │ CONTROL PROCESSING BASED     │──── S51
     │  │    ON INFERENCE PROCESSING   │       │
     │  └──────────────┬───────────────┘       │
     │                 │                       │
     │                 ▼                       │
     │  ┌──────────────────────────────┐       │
     │  │   ADDITIONAL LEARNING        │──── S52
     │  │       PROCESSING             │       │
     │  └──────────────┬───────────────┘       │
     │                 │                       │
     └─────────────────┘───────────────────────┘
```

Fig. 6

```
                    ┌─────────────┐
                    │    START    │
                    └──────┬──────┘
                           │
                           ▼
        ┌──────────────────────────────────┐
        │   PROCESSING OF ACQUIRING         │── S511
        │         INPUT DATA                │
        └──────────────────┬───────────────┘
                           │
                           ▼
        ┌──────────────────────────────────┐
        │     PROCESSING OF READING         │── S513
        │      LATEST DECISION TREE         │
        └──────────────────┬───────────────┘
                           │
                           ▼
        ┌──────────────────────────────────┐
        │   INFERENCE PROCESSING BASED      │── S514
        │        ON DECISION TREE           │
        └──────────────────┬───────────────┘
                           │
                           ▼
        ┌──────────────────────────────────┐
        │   PROCESSING OF OUTPUTTING DATA   │── S516
        └──────────────────┬───────────────┘
                           │
                           ▼
                    ┌─────────────┐
                    │     END     │
                    └─────────────┘
```

Fig. 7

```
            ┌─────────────────┐
            │      START      │
            └────────┬────────┘
                     │
                     ▼
   ┌─────────────────────────────────┐
   │     PROCESSING OF READING        │──── S521
   │      LATEST DECISION TREE        │
   └────────────────┬────────────────┘
                    │
                    ▼
   ┌─────────────────────────────────┐
   │  PROCESSING OF ACQUIRING INPUT   │──── S522
   │      DATA AND ACTUAL DATA        │
   └────────────────┬────────────────┘
                    │
                    ▼
   ┌─────────────────────────────────┐
   │  ADDITIONAL LEARNING PROCESSING  │──── S524
   └────────────────┬────────────────┘
                    │
                    ▼
   ┌─────────────────────────────────┐
   │     PROCESSING OF STORING        │──── S526
   │    ADDITIONALLY LEARNED          │
   │        DECISION TREE             │
   └────────────────┬────────────────┘
                    │
                    ▼
            ┌─────────────────┐
            │       END       │
            └─────────────────┘
```

# Fig. 8

AT TIME OF
CONSTRUCTING
MODEL

AFTER ADDITIONAL
LEARNING

SPACE DIVISION
IS CHANGED

(A) CONCEPTUAL DIAGRAM OF
CONVENTIONAL EXAMPLE

AT TIME OF
CONSTRUCTING
MODEL

AFTER ADDITIONAL
LEARNING

OUTPUT VALUE
IN THIS AREA
IS CHANGED

SPACE DIVISION
IS UNCHANGED

(B) CONCEPTUAL DIAGRAM OF THE INVENTION
OF THE PRESENT APPLICATION

Fig. 9

Fig. 10

Fig. 11

51

42

52

OFFLINE
LEARNING
MODEL

+
−

41

52

ONLINE
LEARNING
MODEL

# Fig. 12

| SIZE | PRICE | COLOR |
|------|-------|-------|
| S | 6000 | RED |
| L | 8000 | GREEN |
| M | 7000 | BLUE |

ONE-HOT ENCODING →

| SIZE | PRICE | RED | GREEN | BLUE |
|------|-------|-----|-------|------|
| S | 6000 | 1 | 0 | 0 |
| L | 8000 | 0 | 1 | 0 |
| M | 7000 | 0 | 0 | 1 |

Fig. 13

| SIZE | PRICE | RED | GREEN | BLUE |
|------|-------|-----|-------|------|
| S | 6000 | 0.5 | 0.5 | 0 |
| L | 8000 | 0 | 1 | 0 |
| M | 7000 | 0 | 0 | 1 |

Fig. 14

(a) EXAMPLE OF DECISION TREE

(b) EXAMPLE OF TWO-DIMENSIONAL INPUT SPACE

| | | |
|---|---|---|
| **INTERNATIONAL SEARCH REPORT** | International application No. | |
| | PCT/JP2021/018228 | |

**A. CLASSIFICATION OF SUBJECT MATTER**
G06N 5/04(2006.01)i; G06N 20/00(2019.01)i
FI: G06N5/04; G06N20/00 130

According to International Patent Classification (IPC) or to both national classification and IPC

**B. FIELDS SEARCHED**

Minimum documentation searched (classification system followed by classification symbols)
G06N5/04; G06N20/00

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y X A | JP 2017-208004 A (FUJI XEROX CO., LTD.) 24 November 2017 (2017-11-24) paragraphs [0007]-[0008], [0024]-[0058], fig. 1-5 | 1-2, 7, 14, 16 18-20 3-6, 8-13, 15, 17 |
| Y A | JP 2019-210535 A (JFE STEEL CORPORATION) 12 December 2019 (2019-12-12) paragraph [0042] | 1-2, 7, 14, 16 3-6, 8-13, 15, 17 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 July 2021 (26.07.2021) | 03 August 2021 (03.08.2021) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

INTERNATIONAL SEARCH REPORT
Information on patent family members

International application No.

PCT/JP2021/018228

| Patent Documents referred in the Report | Publication Date | Patent Family | Publication Date |
|---|---|---|---|
| JP 2017-208004 A | 24 Nov. 2017 | US 2017/0337450 A1 paragraphs [0012]-[0059], fig. 1-5 EP 3246853 A1 CN 107403186 A | |
| JP 2019-210535 A | 12 Dec. 2019 | (Family: none) | |

Form PCT/ISA/210 (patent family annex) (January 2015)

**REFERENCES CITED IN THE DESCRIPTION**

**Patent documents cited in the description**

- WO 2010116450 A